# EUROPÄISCHE PATENTSCHRIFT

(11) **EP 2 887 478 B1**
(45) Veröffentlichungstag und Bekanntmachung des Hinweises auf die Patenterteilung: **06.07.2016**
(21) Anmeldenummer: 13199034.3
(22) Anmeldetag: 20.12.2013
(51) Int. Cl.: H02G 3/12, H02G 3/22

(54) **Einbau einer Leitung in ein Wand- oder Bodenelement**
Installation of a conduit in a wall or floor element
Intégration d'une conduite dans un élément de mur ou de sol

(43) Veröffentlichungstag der Anmeldung: 24.06.2015
(73) Patentinhaber: Hauff-Technik GmbH & Co. KG, 89568 Hermaringen (DE)
(72) Erfinder: Heck, Martin, 89447 Zöschingen (DE); Knoch, Günter, 89155 Erbach (DE)
(74) Vertreter: Szynka, Dirk

(56) Entgegenhaltungen:
- AT-B- 387 835
- DE-A1- 2 414 112

## Beschreibung

Die vorliegende Erfindung betrifft den Einbau einer Leitung in ein Wand- oder Bodenelement.

In der Regel wird bei einem solchen Einbau das Wand- oder Bodenelement auch zugleich erst hergestellt, wird also beispielsweise eine Betonwand oder Betonplatte (eine Bodenplatte) gegossen und umschließt der Beton die dann das Wandoder Bodenelement durchsetzende Leitung, wie zum Beispiel im A-T-B-387835.

Der vorliegenden Erfindung liegt die Aufgabe zugrunde, ein besonders vorteilhaftes Verfahren zum baulich Integrieren einer Leitung in ein Wand- oder Bodenelement anzugeben.

Erfindungsgemäß löst diese Aufgabe ein Verfahren mit den Schritten:
- Vorsehen eines Ansetzstückes, das dazu ausgelegt ist, in dem Wand- oder Bodenelement eine Ausnehmung freizuhalten;
- Montieren des Ansetzstückes an der Leitung, und zwar mit einem Lagerelement zwischen Leitung und Ansetzstück, das eine geringere Shore-Härte als das Ansetzstück hat;
- baulich Integrieren des Ansetzstückes gemeinsam mit der Leitung in das Wand- oder Bodenelement, und zwar durch Vergießen mit zunächst fließfähigem und dann erstarrendem Vergussmaterial, wobei das Ansetzstück in dem dann erstarrten Vergussmaterial die Ausnehmung freihält, die an eine Seitenfläche des Wand- oder Bodenelements grenzt und deren Durchmesser um mindestens 30 % größer als der Außendurchmesser der Leitung ist.

Bevorzugte Ausführungsformen finden sich in den abhängigen Ansprüchen und in der nachstehenden Beschreibung, wobei nicht immer im Einzelnen zwischen der Darstellung von Verfahrens- und Vorrichtungsaspekten beziehungsweise entsprechenden Verwendungsaspekten unterschieden wird; jedenfalls implizit ist die Offenbarung hinsichtlich sämtlicher Anspruchskategorien zu lesen.

Die an die Seitenfläche des Wand- oder Bodenelements grenzende Ausnehmung kann insofern vorteilhaft sein, als die Leitung darin mit etwas "Spiel" geführt werden kann, also beispielsweise unter einem Winkel zur Leitungsrichtung in dem Vergussmaterial. Es kann also beispielsweise ein gewisser Versatz durch entsprechende Leitungsführung ausgeglichen werden, wie nachstehend im Detail erläutert. Vorzugsweise ist die Leitung eine Rohrleitung, also ein Hohlrohr, wobei ein KG-Rohr besonders bevorzugt ist. Mögliche Leitungsaußendurchmesser liegen beispielsweise bei mindestens 10 mm, 20 mm, 50 mm beziehungsweise 90 mm und (davon unabhängig) beispielsweise bei höchstens 500 mm, 400 mm, 300 mm, 200 mm, 150 mm beziehungsweise 125 mm. Der Leitungsaußendurchmesser wird hinsichtlich der Leitungsrichtung in dem Abschnitt der Leitung genommen, in dem das Lagerelement eine Zwischenfläche (siehe unten stehende Definition) zur Leitung hin hat; im bevorzugten Fall eines an der Leitung anliegenden Lagerelements wird der Leitungsaußendurchmesser also dort genommen, wo das Lagerelement an der Leitung anliegt. Bei einer Leitung mit einer ungleichmäßigen, beispielsweise gewellten Außenform wird ein Mittelwert über den jeweiligen Abschnitt betrachtet.

Erfindungsgemäß wird das Ansetzstück über ein im Vergleich zum Ansetzstück weicheres Lagerelement an der Leitung montiert. Der Erfinder hat nämlich einerseits beobachtet, dass ein "härteres" Ansetzstück hinsichtlich des Freihaltens der Ausnehmung Vorteile bieten kann, weil es etwa dem Druck des noch nicht erstarrten Vergussmaterials gut standhalten kann. Andererseits kann ein "hartes" Ansetzstück jedoch bei der Montage beziehungsweise Befestigung nachteilig sein.

Wird beispielsweise eine Bodenplatte gegossen, kann nämlich eine Befestigung des Ansetzstücks über die Montage an der Leitung hinaus erforderlich sein, um einem Aufschwimmen des Ansetzstücks vorzubeugen; das Ansetzstück wird also auch an der Schalung befestigt, also beispielsweise an einer für die Bodenplatte vorgesehenen Eisenmatte. Nun kann diese jedoch bei beziehungsweise vor dem Vergießen noch ein Stück weit verrutschen oder verbogen werden, etwa wenn ein Arbeiter darauf tritt, wodurch eine Kraft auf die Befestigung zum Ansetzstück übertragen werden kann. Da das Ansetzstück vergleichsweise hart ist, also auf eine Krafteinwirkung kaum eine Verformung zeigt, kann es dabei beschädigt oder kann die Befestigung gelöst werden.

Im Ergebnis könnte das Ansetzstück also beispielsweise beim Vergießen aufgrund des Auftriebs aufschwimmen oder es könnte im Falle einer Beschädigung des Ansetzstücks selbst Vergussmaterial in das Ansetzstück und damit gegebenenfalls sogar auch in die Rohrleitung eindringen. Erfindungsgemäß wird deshalb das Ansetzstück über das weichere Lagerelement an der Leitung montiert; das Lagerelement kann in der eben geschilderten Situation auf die Krafteinwirkung mit zumindest einer gewissen Verformung reagieren ("Lagerfunktion"), womit also einer Beschädigung vorgebeugt werden kann.

Das Lagerelement ist "zwischen" Leitung und Ansetzstück vorgesehen, was sich auf Richtungen senkrecht zur Leitungsrichtung bezieht; eine zur Leitungsrichtung senkrechte Ebene schneidet also Leitung, Ansetzstück und Lagerelement. Vorzugsweise gilt dies für sämtliche zur Leitungsrichtung senkrechten Ebenen innerhalb einer Längenerstreckung in Leitungsrichtung, und es wird auf die nachstehende Offenbarung zur Längenerstreckung der Zwischenflächen verwiesen. Vorzugsweise liegt das Lagerelement derart umlaufend vor, dass in einer entsprechenden Schnittebene jede von dem Schnittpunkt mit der Mittenachse der Leitung ausgehende Halbgerade die Leitung, das Lagerelement und das Ansetzstück durchsetzt (von innen nach außen).

Die Shore-Härte (dieser Begriff bezieht sich im Rahmen dieser Offenbarung auf Shore A) des Lagerelements kann beispielsweise um mindestens 10 %, in dieser Reihenfolge zunehmend bevorzugt mindestens 15 %, 20 %, 25 %, 30 %, 35 %, 40 %, 45 % beziehungsweise 50 %, geringer als die Shore-Härte des Ansetzstücks sein. Das Ansetzstück kann beispielsweise eine Shore-Härte von mindestens 80 Shore, vorzugsweise mindestens 85 Shore, weiter bevorzugt mindestens 90 Shore, haben; davon unabhängige Obergrenzen können etwa bei höchstens 110 Shore beziehungsweise höchstens 105 Shore liegen. Das Lagerelement kann beispielsweise eine Shore-Härte von höchstens 65 Shore, vorzugsweise höchstens 60 Shore, weiter bevorzugt höchstens 55 Shore, haben; davon unabhängig können mögliche Untergrenzen beispielsweise bei mindestens 35 Shore beziehungsweise mindestens 40 Shore liegen. Im Falle des Ansetzstücks kann die Shore-Härte insbesondere in dem dann die Ausnehmung freihaltenden Abschnitt ermittelt werden; im Falle des Lagerelements kann die Shore-Härte insbesondere im Bereich einer Zwischenfläche zum Ansetzstück hin ermittelt werden.

Mit Blick auf einen möglichst großen Spielraum beim Ausgleich eines Versatzes soll der Durchmesser der Ausnehmung in dieser Reihenfolge zumindest bevorzugt mindestens 30 %, 40 %, 50 %, 60 %, 70 %, 80 %, 90 % beziehungsweise 100 % größer als der Außendurchmesser der Leitung sein; mögliche Obergrenzen können davon unabhängig etwa bei 500 %, 400 % beziehungsweise 300 % liegen. Im Allgemeinen soll "Durchmesser" im Rahmen dieser Offenbarung nicht zwingend eine Kreisform implizieren, sondern ist der Begriff auf den Mittelwert aus kleinster und größter Erstreckung in einer zur Leitungsrichtung senkrechten Ebene zu lesen, der sich im bevorzugten Fall einer Kreisgeometrie als Kreisdurchmesser ergibt.

Der Durchmesser der Ausnehmung wird durch den Außendurchmesser des Ansetzstücks in dem die Ausnehmung freihaltenden Abschnitt bestimmt, und es sind dementsprechend die Angaben zum Durchmesser der Ausnehmung insbesondere mit Blick auf eine nachstehend weiter im Detail erläuterte Leitungsanordnung auch explizit auf den Außendurchmesser des Ansetzstücks zu lesen (als Mindestdurchmeser für einen Abschnitt davon).

Erfindungsgemäß soll das Ansetzstück also über das Lagerelement an der Leitung montiert werden beziehungsweise sein. Das so ein Stück weit mögliche Relativverkippen von Ansetzstück und Leitung kann auch im Falle einer Montage an der Verschalung eines Wandelements Vorteile bieten. Das Ansetzstück kann so nämlich beispielsweise an einem Schalungselement sicher fixiert sein, wobei die Leitung gleichwohl noch ein Stück weit verkippt werden kann ("Lagerfunktion"), etwa um einen Versatz gegenüber einem Anschlussstück auszugleichen oder die Leitung an geeigneter Stelle durch die Armierung oder an dieser vorbei zu führen.

Generell bezieht sich im Rahmen dieser Offenbarung "Leitungsrichtung" auf die beiden entgegengesetzten Richtungen der Leitung dort, wo das Lagerelement vorgesehen ist, und zwar in einem im Gegensatz zum eben genannten Beispiel nicht verkippten Fall, also bei gerade hindurchgeführter Leitung.

Insbesondere mit Blick auf die "Lagerfunktion" ist eine gewisse Mindesterstreckung der Zwischenflächen des Lagerelements bevorzugt, also der Zwischenfläche zur Leitung hin und/oder der Zwischenfläche zum Ansetzstück hin. "Zwischenfläche" meint im Rahmen dieser Offenbarung bei einstückiger Ausgestaltung eine Übergangsfläche zwischen zwei Bereichen unterschiedlichen Materials oder unterschiedlicher Herstellungsgeschichte, die über die Übergangsfläche jedoch zusammenhängen (Ansetzstück und Lagerelement wären ein Teil, beispielsweise ein Zweikomponenten-Spritzgussteil). Bei der bevorzugten mehrstückigen Ausgestaltung, also etwa im Falle eines Ansetzstücks und eines Lagerelements, die als für sich separate Teile auch getrennt voneinander handhabbar sein können, meint "Zwischenfläche" eine Anlagefläche zwischen den beiden.

Das Bestehen einer jeweiligen Zwischenfläche zur Leitung oder zum Ansetzstück "hin" meint, dass die Zwischenfläche der Leitung oder dem Ansetzstück zugewandt ist, sie muss nicht zwingend unmittelbar mit der Leitung oder dem Ansetzstück ausgebildet sein. Im Allgemeinen muss das Lagerelement ja beispielsweise nicht zwingend unmittelbar an der Leitung anliegen, sondern kann es beispielsweise auch auf einer die Leitung umschließenden Hülse aus zum Beispiel einem härteren Material montiert werden (und würden sich die folgenden Angaben dann auf die Zwischenfläche zwischen Lagerelement und Hülse beziehen). Vorzugsweise besteht jedoch eine Zwischenfläche unmittelbar zwischen Lagerelement und Ansetzstück und/oder eine Zwischenfläche unmittelbar zwischen Lagerelement und Leitung, besonders bevorzugt jeweils eine Anlagefläche unmittelbar.

Eine jeweilige Zwischenfläche des Lagerelements soll vorzugsweise eine in Leitungsrichtung genommene Längenerstreckung haben, die mindestens 10 % des Außendurchmessers der Leitung (im Bereich des Lagerelements) beträgt, in dieser Reihenfolge zunehmend bevorzugt mindestens 15 %, 20 % , 22 %, 24 %, 26 %, 28 % beziehungsweise 30 % (mögliche Obergrenzen können etwa bei 150 % beziehungsweise 100 % liegen). Bevorzugt ist auch, dass beide Lagerelement-Zwischenflächen entsprechend "lang" und damit großflächig ausgebildet sind; das Lagerelement kann das Ansetzstück dann beispielsweise flexibel aber zugleich sicher an der Leitung halten.

Vorzugsweise ist eine entsprechende Längenerstreckung jeweils umlaufend gegeben (die Umlaufrichtung bezieht sich auf einen Umlauf um die in Leitungsrichtung orientierte Mittenachse der Leitung). Die Zwischenfläche kann auch unterbrochen sein, wobei die Zwischenfläche dann aufsummiert betrachtet wird; vorzugsweise ist die Zwischenfläche jedoch durchgehend ausgebildet, und zwar sowohl in Leitungs- als auch in Umlaufrichtung.

Mit Blick auf die "Lagerfunktion" kann auch eine gewisse Mindestdicke des Lagerelements Vorteile bieten; die Dicke wird senkrecht zur Leitungsrichtung genommen und soll in bevorzugter Ausgestaltung mindestens 5 %, in dieser Reihenfolge zunehmend bevorzugt mindestens 7 %, 9 %, 10 %, 11 % beziehungsweise 12 %, des Außendurchmessers der Leitung betragen (des Außendurchmessers dort, wo das Lagerelement anliegt). Ein Lagerelement mit gewisser Mindestdicke kann beispielsweise ein vorstehend beschriebenes Verkippen von Ansetzstück und Leitung ermöglichen. Betrachtet wird dabei die Dicke des Ansetzstücks dort, wo der Kontakt zum Ansetzstück hin besteht, vorzugsweise das Lagerelement am Ansetzstück anliegt; im Falle unterschiedlicher Dicken dort wird ein Mittelwert betrachtet (gemittelt in Leitungs- und Umlaufrichtung, eben über die Zwischenfläche zwischen Lagerelement und Ansetzstück).

Wie bereits vorstehend erwähnt, liegt das Lagerelement in bevorzugter Ausgestaltung an der Leitung an; weiter bevorzugt liegt allein das Lagerelement an, berührt also das Ansetzstück die Leitung nicht. Das Ansetzstück ist also nur über das Lagerelement und damit im Rahmen dessen geringerer Shore-Härte gut beweglich an der Leitung gelagert; anders ausgedrückt hindert keine Anlage zwischen (dem im Vergleich harten) Ansetzstück und der Leitung die Beweglichkeit.

Generell sind das Ansetzstück und das Lagerelement, wie bereits erwähnt, vorzugsweise mehrstückig. Weiter bevorzugt sind das Ansetzstück und/oder das Lagerelement jeweils monolithisch, ist das jeweilige Material also jeweils durchgehend vorgesehen, also ohne Übergang in ein anderes Material oder ein Material anderer Herstellungsgeschichte; ein "monolithisches" Teil kann also beispielsweise in einem Schritt durch Pressen oder Gießen in eine Form hergestellt sein (dabei muss nicht zwingend die Endform erreicht werden, sondern kann auch nachträglich noch Material abgetragen werden, etwa bei einem Entgraten).

Besonders bevorzugt ist jedenfalls eine Ausführungsform, bei welcher Ansetzstück und Lagerelement mehrstückig sind und letzteres sowohl an der Leitung als auch am Ansetzstück anliegt. Die übrigen bevorzugten Ausgestaltungen sollen explizit auch auf eine Kombination damit zu lesen sein.

Im Allgemeinen könnten das Ansetzstück und das Lagerelement indes, selbst wenn sie aus unterschiedlichen Materialien vorgesehen sind, auch einstückig, also als zusammenhängendes Teil, vorgesehen sein; Lagerelement und Ansetzstück könnten beispielsweise aneinander angeformt sein, etwa in einem Mehrkomponenten-Spritzgussverfahren.

Ein Vorteil der Mehrstückigkeit kann etwa darin bestehen, dass Ansetzstück und Lagerelement vergleichsweise einfache und damit kostengünstig herzustellende Teile sind. Bei dem Lagerelement handelt es sich vorzugsweise um ein Pressteil, das durch Pressen von beispielsweise synthetischem Gummimaterial in einer Form und Vulkanisieren desselben darin hergestellt ist. Das synthetische Gummimaterial kann beispielsweise Styrol, Butadien, Styrolacrylat, Reinacrylat beziehungsweise Vinylacetat als Bestandteil aufweisen.

Das Ansetzstück kann beispielsweise ein Tiefziehteil sein; ein bevorzugtes Material für das Ansetzstück kann etwa Acrylnitril-Butadien-Styrol (ABS), Polystyrol (PS) und/oder Polyethylen (PE) aufweisen.

Generell ist das Lagerelement mit Blick auf die Lagerfunktion zwar "weicher" und bis zu einem gewissen Maß gut elastisch verformbar, ist es also nicht formfest im Sinne von starr; gleichwohl soll es formstabil sein, also in einem vorgelagerten Herstellungsprozess bereits in eine Form gebracht worden sein, welche Form es nach Wegnahme einer Kraft bei elastischer Verformung auch im Wesentlichen wieder einnimmt. Beim Aufsetzen des Lagerelements auf die Leitung beziehungsweise beim Einsetzen der Leitung in das Lagerelement ist letzteres also bereits hergestellt, ist ein Lagerelement-Kunststoffmaterial also beispielsweise bereits seinem Endzustand entsprechend vernetzt (vernetzt es also nicht erst an der Leitung).

Wenngleich das Lagerelement und das Ansetzstück also vorzugsweise mehrstückig sind, werden sie besonders bevorzugt dennoch gemeinsam gehandhabt, liegt das Ansetzstück also mit bereits eingesetztem Lagerelement vor und wird entsprechend die Gesamtheit aus Ansetzstück und Lagerelement an der Leitung montiert.

Generell ist das Ansetzstück vorzugsweise ein Hohlkörper, besonders bevorzugt ein vergleichsweise dünnwandiger Hohlkörper. Die Wandstärke (die entlang einer Normalen auf die Wandfläche genommen wird) soll also beispielsweise weniger als 10 mm, vorzugsweise weniger als 6 mm, weiter bevorzugt weniger als 4 mm betragen. Ein von der Innenwand des Hohlkörpers begrenzter Innenraum kann beispielsweise um höchstens 20%, vorzugsweise höchstens 15%, weiter bevorzugt höchstens 10%, kleiner als die vom Ansetzstück freigehaltene Ausnehmung sein.

Bei einer bevorzugten Ausführungsform ist an dem (zum Ansetzstück mehrstückigen) Lagerelement ein sich von der Leitung weg erhebender erster Vorsprung vorgesehen, der an einer Innenwandfläche des Ansetzstücks anliegt; dieser erste Vorsprung ist dabei bezogen auf die Seitenfläche des Wand- oder Bodenelements, an welche die Ausnehmung grenzt, proximal der Anlagefläche zwischen Lagerelement und Ansetzstück angeordnet, also der Seitenfläche näher als die Anlagefläche.

Der erste Vorsprung kann sich beispielsweise um mindestens 3 %, vorzugsweise mindestens 5 %, weiter bevorzugt mindestens 7 %, des Außendurchmessers der Leitung von einem an den Vorsprung anschließenden, sich in Leitungsrichtung erstreckenden Außenwandbereich (der nach außen durchaus durch das Ansetzstück abgedeckt sein kann) senkrecht zur Leitungsrichtung erheben. Vorzugsweise ist der erste Vorsprung umlaufend vorgesehen; er kann eine Dichtung zwischen Ansetzstück und Lagerelement beziehungsweise die Lagerung des Ansetzstücks an letzterem verbessern helfen und Ansetzstück und Lagerelement auch in einer Relativposition halten (jedenfalls hinsichtlich einer der Leitungsrichtungen).

Der Bereich der Innenwandfläche, an dem der erste Vorsprung anliegt, hat entsprechend auch eine Erstreckung senkrecht zur Leitungsrichtung und liegt in der Regel beim Übergang zwischen einem Kontaktabschnitt des Ansetzstücks und einem Freihalteabschnitt. Ersterer hat eine Zwischenfläche zum Lagerelement, und letzterer erstreckt sich von dort bis zur Seitenfläche (und gegebenenfalls darüber hinaus bei Montage in einer Bodenplatte).

In bevorzugter Ausgestaltung ist der Kontaktabschnitt als sich in Leitungsrichtung erstreckender Kragen vorgesehen, also gewissermaßen als Rohrstutzen, mit dem das Ansetzstück das Lagerelement großflächig kontaktiert, vorzugsweise daran anliegt. Es kontaktiert also eine Innenwandfläche des Kragens das Lagerelement.

Bezogen auf den Außendurchmesser der Leitung kann sich der Kragen in Leitungsrichtung beispielsweise über mindestens 10 %, in dieser Reihenfolge zunehmend bevorzugt mindestens 12 %, 14 %, 16 %, 18 %, 20 % beziehungsweise 22 %, dieses Außendurchmessers erstrecken; vorzugsweise ist der Kragen dabei umlaufend mit einer entsprechenden Erstreckung in Leitungsrichtung vorgesehen. Entsprechend ist "großflächig" zu lesen. Besonders bevorzugt ist der Kragen zu einer Mittenachse der Leitung rotationssymmetrisch.

Eine weitere bevorzugte Ausführungsform betrifft ein (zum Ansetzstück mehrstückiges) Lagerelement mit einem zweiten Vorsprung, der (wiederum bezogen auf die Seitenfläche) distal der Anlagefläche zwischen Lagerelement und Ansetzstück vorgesehen ist und der sich ebenfalls von der Leitung weg erhebt. Seine Erstreckung senkrecht zur Leitungsrichtung betreffend sollen dieselben Werte wie für den ersten Vorsprung offenbart sein; auch der zweite Vorsprung ist vorzugsweise umlaufend vorgesehen.

Der zweite Vorsprung liegt an einer der Seitenfläche abgewandten Stirnseite des Ansetzstücks an. Er kann so das Ansetzstück in Position halten, und zwar im Vergleich zum ersten Vorsprung bezogen auf die entgegengesetzte Leitungsrichtung. Im Allgemeinen könnte selbstverständlich auch nur einer von erstem und zweitem Vorsprung vorgesehen sein, vorzugsweise sind es beide, und zwar besonders bevorzugt in Verbindung mit einem hinsichtlich der Leitungsrichtung dazwischen angeordneten, als Kragen ausgebildeten Kontaktabschnitt des Ansetzstücks.

Im Falle einer mehrstückigen Ausgestaltung kann also einerseits bevorzugt sein, dass das Ansetzstück gleichwohl in seiner Relativposition festgelegt am Lagerelement gehalten ist, eben vorzugsweise ein Kragen (des Ansetzstücks) zwischen erstem und zweitem Vorsprung gehalten ist.

Andererseits kann auch ein ein Stück weit verschiebbar am Lagerelement geführtes Ansetzstück Vorteile bieten, es kann nämlich eine gewisse Einstellung der Länge in Leitungsrichtung ermöglichen. Das Ansetzstück wird dann also beispielsweise über das Lagerelement montiert und schließlich vor dem Vergießen in seine endgültige Relativposition dazu und zur Leitung gebracht werden, was die Flexibilität erhöhen kann. Auch im Falle einer solchen Verschiebbarkeit ist ein Ansetzstück mit einem Kragen bevorzugt, der dann mit einem eben der Verschiebbarkeit entsprechenden Spiel zwischen erstem und zweitem Vorsprung gehalten ist (und je nach Längeneinstellung am ersten oder zweiten Vorsprung anliegen kann).

Bezogen auf den Abstand zur Mittenachse der Leitung innenseitg am Lagerelement, also dort, wo vorzugsweise die Anlagefläche zwischen Leitung und Lagerelement ausgebildet ist, kann etwa für eine lagefixierte Montage eines an der Leitung anliegenden Lagerelements in bevorzugter Ausgestaltung eine Ausnehmung vorgesehen sein, die einen entsprechenden, außenseitig der Leitung ausgebildeten Vorsprung aufnimmt. Das Lagerelement kann so beispielsweise gegen ein Verrutschen in Leitungsrichtung gesichert sein. Vorzugsweise ist die Ausnehmung also zu beiden Enden des Lagerelements beabstandet; das Lagerelement wird dann weiter bevorzugt bei der Montage ein Stück weit gedehnt und aufgezogen, bis der Vorsprung in der Ausnehmung sitzt.

In bevorzugter Weiterbildung ist die Ausnehmung umlaufend vorgesehen, etwa als umlaufende Nut. Auch der Vorsprung kann dann umlaufend ausgebildet sein; insbesondere kann es sich bei dem Vorsprung um eine Auswölbung an der Muffe eines Rohrstücks handeln, in welcher innenseitig (im Inneren der Muffe) ein Dichtring gehalten sein kann.

Bei einer bevorzugten Ausführungsform ist außenseitig am Lagerelement, und zwar in einem vom Ansetzstück freien Abschnitt davon, eine sich von der Leitung weg erhebende Stegdichtung vorgesehen, vorzugsweise umlaufend. Die Stegdichtung wird beim Vergießen von dem Vergussmaterial umschlossen und kann, auch wenn dieses beim Aushärten ein Stück weit schrumpfen sollte, aufgrund des "weichen" Lagerelement-Materials gleichwohl zum erstarrten Vergussmaterial hin dichten. Neben der "Lagerfunktion" kann das Lagerelement dann also vorteilhafterweise zugleich eine Dichtfunktion zum Wand- oder Bodenelement hin übernehmen.

Es können auch eine Mehrzahl Stegdichtungen vorgesehen sein, beispielsweise mindestens zwei beziehungsweise mindestens drei; bevorzugt sind drei Stegdichtungen. In bevorzugter Ausgestaltung ist der vorstehend genannte zweite Vorsprung zugleich als Stegdichtung vorgesehen, hält er also zum einen, insbesondere im Falle einer Mehrstückigkeit, das Ansetzstück in Position und wird er zum anderen dann von dem Vergussmaterial umschlossen. Eine Stegdichtung betreffend meint "umschlossen", dass sich an zwei sich schräg, vorzugsweise senkrecht, zur Leitungsrichtung erstreckenden Flanken (einer proximalen und einer distalen) sowie am freien (der Leitung abgewandten) Ende der Stegdichtung beim Vergießen Vergussmaterial anlegt.

Eine Stegdichtung kann senkrecht zur Leitungsrichtung eine beispielsweise mindestens 1,5-fache, vorzugsweise mindestens 2-fache, weiter bevorzugt mindestens 2,5-fache, Erstreckung der Erstreckung in Leitungsrichtung (also zwischen ihren beiden Flanken) haben; im Falle schräg zur Leitungsrichtung orientierter Flanken wird der mittlere Abstand zwischen diesen betrachtet.

Eine bevorzugte Ausführungsform, die im Übrigen auch unabhängig von den Merkmalen des Hauptanspruchs, konkret unabhängig vom Merkmal "Lagerelement", als Erfindung gesehen wird und in dieser Form offenbart sein soll, betrifft ein gegenüber der Leitung mit einem Halteelement lagefixiertes Ansetzstück. Die zu den übrigen Bestandteilen, also insbesondere zu Ansetzstück und Leitung, getroffenen Angaben zu bevorzugten Werten oder Eigenschaften sollen ausdrücklich auch in diesem Zusammenhang offenbart sein, also auch im Falle eines Ansetzstücks mit Halteelement (ohne dass zwingend ein Lagerelement vorgesehen sein muss). Die folgenden Angaben zum Halteelement sind hinsichtlich beider Varianten (mit/ohne Lagerelement) zu lesen.

Das das Ansetzstück gegenüber der Leitung, insbesondere gegenüber einem Rohrstück, vorzugsweise einer Rohrmuffe, lagefixierende Halteelement ist an einer Innenwandfläche befestigt, beispielsweise durch eine Fügeverbindung, vorzugsweise durch Kleben; das Halteelement kann auch durch Schweißen, insbesondere Reibschweißen an der Innenwandfläche befestigt sein. Um das Ansetzstück lagezufixieren, hintergreift das Halteelement zudem entweder ein Ende der Leitung, könnte es also beispielsweise an der ringförmigen Stirnfläche einer Rohrleitung anliegen, oder hintergreift es einen an der Leitung nach außen hervortretenden Vorsprung.

In diesem Zusammenhang meint "hintergreifen", dass das Halteelement einen Abschnitt mit einer Erstreckung senkrecht zur Leitungsrichtung hat, an welchem Abschnitt dann die Leitung eine Anlage findet und so in ihrer Relativposition zur Leitung festgelegt ist (jedenfalls in einer Leitungsrichtung). Vorzugsweise ist das Halteelement umlaufend mit der Form eines Rings vorgesehen, vorzugsweise einer Kreisringform. An der Innenwandfläche des Ansetzstücks wird ein bezogen auf den Abstand zur Mittenachse der Leitung äußerer Abschnitt des Halteelements befestigt, und ein innerer Abschnitt hintergreift die Leitung. Die Befestigung am Ansetzstück drückt den die Leitung hintergreifenden Abschnitt in die Anlage an der Leitung.

Vorzugsweise soll das Halteelement einen Bereich der Außenwandfläche der Leitung hintergreifen, und zwar einen nach außen hervortretenden Vorsprung an der Leitung. Ein solcher Vorsprung kann zugleich auch ein Gegenlager darstellen, sodass das (befestigte) Halteelements in einer Leitungsrichtung gegen den Vorsprung drückt und das Ansetzstück in der entgegengesetzten Richtung gegen den Vorsprung gedrückt wird, jedenfalls mittelbar (es kann beispielsweise das Lagerelement dazwischen sein).

Im Folgenden werden einige weitere bevorzugte Ausgestaltungen beschrieben, welche die Erfindung ganz allgemein betreffen (aber auch die zuletzt beschriebene Variante "ohne Lagerelement").

Die Ausnehmung soll vorzugsweise eine in Leitungsrichtung genommene Länge haben, die sich auf mindestens 30 %, in dieser Reihenfolge zunehmend bevorzugt mindestens 40 %, 50 %, 60 % beziehungsweise 70 %, des Außendurchmessers der Leitung bemisst. Dieselben Mindestangaben gelten dann selbstverständlich für die in Leitungsrichtung genommene Länge des Ansetzstücks.

Vorzugsweise wird das Ansetzstück an ein Ende der Leitung gesetzt, insbesondere an das Ende einer Rohrleitung, und ist dieses Ende der Leitung zur Seitenfläche des Wand- oder Bodenelements beabstandet, und zwar vorzugsweise um in etwa die in Leitungsrichtung genommene Länge der Ausnehmung. Beim Vergießen kann ein der Leitung abgewandtes Ende des Ansetzstückes übrigens auch mit einem Deckel verschlossen werden.

Wie bereits eingangs erwähnt, wird das Ansetzstück zusätzlich zur Montage an der Leitung vorzugsweise auch an einer Schalung befestigt. "Schalung" kann einerseits ein Schalungselement meinen, also ein beim Gießen des Wand- oder Bodenelements die entsprechende Kavität (mit)begrenzendes Element; andererseits ist "Schalung" auch auf ein mit vergossenes Stabilisierungslement zu lesen, das dann also innerhalb des Wand- oder Bodenelements angeordnet ist, etwa auf eine Armierung.

Zur Befestigung an der Schalung kann am Ansetzstück außenseitig ein sich schräg zur Leitungsrichtung, vorzugsweise senkrecht dazu, weg erhebender Vorsprung vorgesehen sein, mittels welchem das Ansetzstück an der Schalung befestigt wird. Dieser Vorsprung ist vorzugsweise als umlaufender Flansch vorgesehen; bevorzugt ist auch eine Anordnung des Vorsprungs an einem Ende des Ansetzstücks, nämlich am proximalen. In dem bevorzugten Flansch können beispielsweise in Leitungsrichtung orientierte Durchgangslöcher vorgesehen sein, über welche das Ansetzstück etwa im Falle einer Bodenplatte gegenüber einer Armierung verspannt oder im Falle eines Wandelements an einem Schalungselement festgenagelt beziehungsweise -geschraubt werden kann.

Nach dem Vergießen, insbesondere nach dem Aushärten des Vergussmaterials, verbleibt ein als Hohlkörper vorgesehenes Ansetzstück vorzugsweise in dem dann erstarrten Vergussmaterial. Generell ist das Ansetzstück vorzugsweise ein Hohlkörper.

Im bevorzugten Fall einer Rohrleitung, konkret eines Rohrstücks, an dessen zur Seitenfläche beabstandeten Ende das Ansetzstück montiert ist, wird die Rohrleitung durch Einsetzen eines weiteren Rohrstücks verlängert. Anschließend kann der noch verbleibende Hohlraum, der von der Innenwandfläche des Ansetzstücks und der Außenwandfläche der Rohrleitung begrenzt wird, aufgefüllt werden, vorzugsweise mit einem ebenfalls fließfähigen und dann erstarrenden Auffüllmaterial.

Bevorzugt ist eine in der Ausnehmung gewinkelte Verlängerung der Rohrleitung, besonders bevorzugt eine Verlängerung mit zwei Rohrbögen desselben Winkels, sodass ein Versatz senkrecht zur Leitungsrichtung ausgeglichen wird. Den beiden Rohrbögen vor- und nachgelagert soll die Rohrleitung dann also dieselbe Richtung haben, allerdings sollen die entsprechenden Abschnitte senkrecht zur Leitungsrichtung zueinander versetzt sein.

Vorzugsweise ist die Leitung eine Rohrleitung, wird sie mit dem Ansetzstück in eine Bodenplatte integriert und wird anschließend auf der Bodenplatte ein Wandelement errichtet; dabei wird in der Ausnehmung dann ein horizontaler Versatz zwischen der für das Wandelement vorgesehenen Position und der Rohrleitung (in der Bodenplatte, der Ausnehmung vorgelagert) zumindest teilweise ausgeglichen, indem die Rohrleitung in der Ausnehmung gekrümmt verlängert wird, vorzugsweise mit zwei Rohrbögen desselben Winkels. Auch das Wandelement kann dann beispielsweise aus Vergussmaterial hergestellt werden, wobei der erfindungsgemäße Versatzausgleich etwa die Anbringung einer Schalung vereinfachen kann.

Die Erfindung betrifft, wie bereits eingangs erwähnt, auch eine zum baulich Integrieren in ein Wand- oder Bodenelement vorgesehene Leitungsanordnung mit einem Ansetzstück, einem Lagerelement und einer Leitung, wobei zwischen Ansetzstück und Leitung eben das Lagerelement geringerer Shore-Härte angeordnet ist; das Ansetzstück ist so ausgelegt, dass es in einem Wand- oder Bodenelement eine an eine Seitenfläche desselben grenzende Ausnehmung freihält, die um mindestens 30 % größer als der Außendurchmesser der Leitung ist. In anderen Worten hat das Ansetzstück also in einem Freihalteabschnitt (zum Freihalten der Ausnehmung), der an den Kontaktabschnitt (zur Leitung hin) anschließt, einen im Vergleich zur Leitung entsprechend großen Außendurchmesser.

Bei der Ermittlung des Außendurchmessers des Ansetzstücks soll beispielsweise ein endseitig des Ansetzstücks vorgesehener, dessen Befestigung an der Schalung dienender Kragen unberücksichtigt bleiben; der Außendurchmesser soll also beispielsweise um 5 cm von dem zur Montage an der Leitung vorgesehenen Ende entgegengesetzten Ende des Ansetzstücks nach innen versetzt genommen werden, also 5 cm von dem Ende größeren Durchmessers nach innen in Richtung des entgegengesetzten Endes versetzt.

Es sollen sämtliche vorstehend für Ansetzstück und Lagerelement sowie auch Leitung als bevorzugt offenbarten Angaben ausdrücklich auch eine solche Leitungsanordnung betreffend offenbart sein. Im Allgemeinen könnten bei der Leitungsanordnung Leitung, Lagerelement und Ansetzstück auch einstückig ausgebildet sein; vorzugsweise sind sie jedoch mehrstückig; besonders bevorzugt liegt das Lagerelement an Leitung und Ansetzstück an.

Die Erfindung betrifft auch ein Wand- oder Bodenelement mit einer solchen Leitungsanordnung darin.

Ferner betrifft die Erfindung die Verwendung eines Ansetzstücks und eines Lagerelements für eine entsprechende Leitung beziehungsweise ein Wand- oder Bodenelement.

Im Folgenden wird die Erfindung anhand von Ausführungsbeispielen näher erläutert, wobei die einzelnen Merkmale auch in anderer Kombination erfindungswesentlich sein können und sich die Offenbarung weiterhin auf sämtliche Anspruchskategorien bezieht.

Im Einzelnen zeigt
- Fig. 1: eine erfindungsgemäße Anordnung aus Ansetzstück, Lagerelement und Leitung in einer geschnittenen Seitenansicht;
- Fig. 2: die Anordnung gemäß Fig. 1 in einer Seitenansicht.

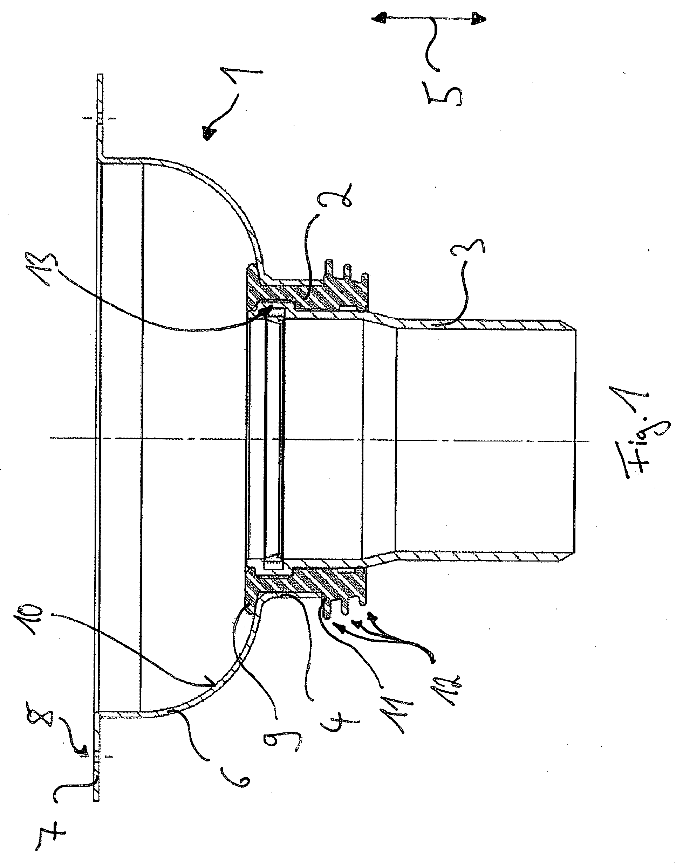

Fig. 1 zeigt ein Ansetzstück 1, das über ein Lagerelement 2 an einer Leitung montiert ist, und zwar an einer Rohrleitung 3. Konkret ist das Lagerelement 2 auf eine Muffe eines Rohrstücks gesetzt.

Das Ansetzstück 1 umfasst einen Kontaktabschnitt, nämlich einen sich in Leitungsrichtung 5 erstreckenden Kragen 4, mit welchem es an dem Lagerelement 2 anliegt. Weiterhin umfasst das Ansetzstück 1 einen Freihalteabschnitt 6, der sich vom Ende der Rohrleitung 3 weg weitet und dazu vorgesehen ist, in einem dann gegossenen Wand- oder Bodenelement eine an das Ende der Rohrleitung 3 anschließende Ausnehmung freizuhalten, die bis zu einer entsprechenden Seitenfläche des Wand- oder Bodenelements reicht.

Wird die in Fig. 1 gezeigte Leitungsanordnung also beispielsweise in einer Bodenplatte vergossen, wird der Bereich um die Anordnung bis zu einer gewissen Höhe mit Beton aufgefüllt, etwa bis einige Zentimeter unterhalb des sich senkrecht zur Leitungsrichtung 5 erstreckenden Kragens 7. In dem dann erstarrten Beton hält das Ansetzstück 1 so eine Ausnehmung frei, in welcher die Rohrleitung 3 auch gewinkelt geführt werden kann, also zur Leitungsrichtung 5 verkippt. Es können also beispielsweise zwei Rohrbögen desselben Winkels derart eingesetzt werden, dass die Rohrleitung 3 oberhalb der Bodenplatte wieder parallel zur Leitungsrichtung 5 orientiert ist, die Mittenachse der Rohrleitung jedoch gegenüber dem (in der Figur gezeigten) Abschnitt innerhalb der Bodenplatte seitlich, also horizontal, versetzt. Die Rohrleitung 3 kann so beispielsweise an die Position eines auf der Bodenplatte errichteten Wandelements angepasst werden.

In dem Kragen 7 sind Durchgangsöffnungen 8 vorgesehen, durch welche beispielsweise ein Draht gefädelt werden kann, um das Ansetzstück 1 vor dem Vergießen nach unten zu verspannen und so einem Aufschwimmen beim Vergießen vorzubeugen. Der Draht bzw. ein entsprechendes Befestigungselement generell kann dazu beispielsweise an einer in der Bodenplatte mit vergossenen Armierung, also etwa einer Eisenmatte, befestigt werden.

Da dies bei bzw. vor dem Vergießen einen Kräfteeintrag bewirken kann, etwa wenn die Armierung ein Stück weit verrutscht oder verbogen wird, ist erfindungsgemäß das Lagerelement 2 vorgesehen, welches das im Vergleich härtere Ansetzstück 1 mit zumindest einer gewissen Beweglichkeit gegenüber der Leitungsrichtung 5 verkippbar an der Rohrleitung 3 hält. Das Ansetzstück 1 ist nämlich aus ABS vorgesehen und hat eine Shore-Härte von 90 Shore, wohingegen das Lagerelement 2 aus einem Gummimaterial vorgesehen ist und eine Shore-Härte von nur 40 Shore hat.

Das Ansetzstück 1 ist ein Tiefziehteil, und das Lagerelement 2 ist durch Pressen in eine Form hergestellt; die beiden Teile sind zueinander zweistückig und für sich jeweils monolithisch.

Damit Ansetzstück 1 und Lagerelement 2 dennoch in ihrer Relativposition zueinander festgelegt und gut handhabbar aneinandergehalten sind, liegt das Ansetzstück 1 zum einen großflächig mit seinem Kragen 4 an dem Lagerelement 2 an. Zudem ist (bezogen auf die Seitenfläche des Wand- oder Bodenelements, also die Oberfläche der Bodenplatte) proximal der Anlagefläche zwischen Kragen 4, und Lagerelement 2 ein erster Vorsprung 9 vorgesehen, der sich an einen Bereich der Innenwandfläche 10 des Ansetzstücks 1 anliegt. Der erste Vorsprung 9 sichert das Ansetzstück gegen ein Verrutschen in einer der Leitungsrichtungen 5, nämlich nach oben.

Um das Ansetzstück 1 auch in der entgegengesetzten Richtung zu sichern, ist am Lagerelement 2 ein zweiter Vorsprung 11 vorgesehen, an dem eine der Seitenfläche abgewandte Stirnseite des Ansetzstücks 1 anliegt. Der zweite Vorsprung 11 erfüllt zugleich die Funktion einer Stegdichtung, ist also umlaufend vorgesehen und erhebt sich nach außen vom übrigen Lagerelement weg, und zwar um ca. das 2,5-fache seiner Erstreckung in Leitungsrichtung 5.

Insgesamt sind an dem Lagerelement 2 drei Stegdichtungen 12 vorgesehen, die nach dem Vergießen von dem Beton umschlossen sind und zu diesem hin dichten. Die Stegdichtungen 12 können also Kriechwege für Feuchtigkeit entlang den Außenflächen von Ansetzstück 1, Lagerelement 2 und Rohrleitung 3 zumindest verlängern und gegebenenfalls auch blockieren.

Damit das Lagerelement 2 sicher an der Rohrleitung 3 gehalten ist, ist innenseitig eine umlaufende Lagerelement-Ausnehmung 13 vorgesehen, die einen im Wesentlichen komplementären Vorsprung der Rohrleitung 3 aufnimmt. Lagerelement 2 und damit auch Ansetzstück 1 sind so gegen ein Verrutschen relativ zueinander in Leitungsrichtung 5 gesichert. Dabei muss vorteilhafterweise nicht eigens ein Vorsprung an der Rohrleitung 3 ausgebildet werden, sondern ist die Lagerelement-Ausnehmung 13 an eine Auswölbung angepasst, die innenseitig (dementsprechend als Nut) einen Dichtring der Muffe aufnimmt.

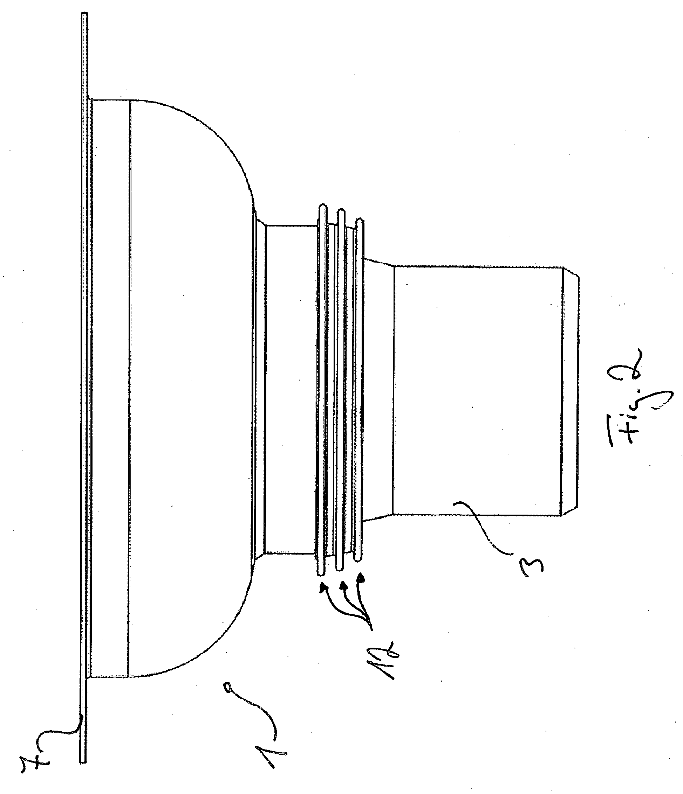

Fig. 2 zeigt die Anordnung in einer nicht geschnittenen Seitenansicht, wobei insbesondere die umlaufende Ausgestaltung der Stegdichtungen 12 zu erkennen ist. Nach dem Vergießen sind die in Fig. 2 sichtbaren Außenflächen dann, von dem Kragen 7 und einem kurzen Abschnitt unterhalb davon abgesehen, mit Beton bedeckt.

## Patentansprüche

1. Verfahren zum baulich Integrieren einer Leitung (3) in ein Wand- oder Bodenelement, umfassend die Schritte:
- Vorsehen eines Ansetzstückes (1), das dazu ausgelegt ist, in dem Wand- oder Bodenelement eine Ausnehmung freizuhalten;
- Montieren des Ansetzstückes (1) an der Leitung (3), und zwar mit einem Lagerelement (2) zwischen Leitung (3) und Ansetzstück (1)
- baulich Integrieren des Ansetzstückes (1) gemeinsam mit der Leitung (3) in das Wand- oder Bodenelement, und zwar durch Vergießen mit zunächst fließfähigem und dann erstarrendem Vergussmaterial, wobei das Ansetzstück (1) in dem dann erstarrten Vergussmaterial die Ausnehmung freihält, die an eine Seitenfläche des Wand- oder Bodenelements grenzt **dadurch gekennzeichnet dass** das Lagerelement (3) eine geringere Shore-Härte als das Ansetzstück (1) hat und die Ausnehmunge einen Durchmesser um mindestens 30 % größer als der Außendurchmesser der Leitung (3) hat.

2. Verfahren nach Anspruch 1, bei welchem das Lagerelement zum Ansetzstück (1) hin und zur Leitung (3) hin jeweils eine Zwischenfläche hat, wobei zumindest eine dieser Lagerelement-Zwischenflächen eine in Leitungsrichtung (5) genommene Längenerstreckung hat, die mindestens 10 % des Außendurchmessers der Leitung (3) beträgt.

3. Verfahren nach Anspruch 1 oder 2, bei welchem das Lagerelement (2) eine senkrecht zur Leitungsrichtung (5) genommene Dicke hat, die mindestens 5 % des Außendurchmessers der Leitung (3) beträgt.

4. Verfahren nach einem der vorstehenden Ansprüche, bei welchem das Lagerelement (2) an der Leitung (3) anliegt, wobei vorzugsweise allein das Lagerelement (2) an der Leitung (3) anliegt.

5. Verfahren nach einem der vorstehenden Ansprüche, bei welchem das Ansetzstück (1) und das Lagerelement (2) mehrstückig sind.

6. Verfahren nach einem der vorstehenden Ansprüche, bei welchem das Lagerelement (2) an der Leitung anliegt und innenseitig am Lagerelement (2) eine Ausnehmung (13) vorgesehen ist, die einen nach außen hervortretenden Vorsprung der Leitung (3) aufnimmt.

7. Verfahren nach Anspruch 5, auch nach Anspruch 5 in Verbindung mit Anspruch 6, bei welchem an dem Lagerelement (2), bezogen auf die Seitenfläche des Wand- oder Bodenelements proximal einer Anlagefläche zwischen Lagerelement (2) und Ansetzstück (1), ein sich von der Leitung weg erhebender erster Vorsprung (9) vorgesehen ist, der an einem Bereich einer Innenwandfläche (10) des Ansetzstücks (1) anliegt.

8. Verfahren nach einem der vorstehenden Ansprüche, bei welchem das Ansetzstück (1) mit einem der Seitenfläche des Wand- oder Bodenelements abgewandten Kragen (4) versehen ist, der eine Erstreckung in Leitungsrichtung (5) und eine großflächige Zwischenfläche zum Lagerelement (2) hin hat.

9. Verfahren nach Anspruch 5, auch nach Anspruch 5 in Verbindung mit einem weiteren der Ansprüche 6 bis 8, bei welchem an dem Lagerelement (2), bezogen auf die Seitenfläche des Wand- oder Bodenelements distal einer Anlagefläche zwischen Lagerelement (2) und Ansetzstück (1), ein sich von der Leitung (3) weg erhebender zweiter Vorsprung (11) vorgesehen ist, der an einer der Seitenfläche abgewandten Stirnseite des Ansetzstücks (1) anliegt.

10. Verfahren nach Anspruch 5, vorzugsweise in Verbindung mit einem oder mehreren der Ansprüche 6 bis 9, bei welchem das Ansetzstück (1) in Leitungsrichtung (5) verschiebbar am Lagerelement (2) geführt ist.

11. Verfahren nach einem der vorstehenden Ansprüche, bei welchem außenseitig am Lagerelement (2) eine sich von der Leitung (3) weg erhebende Stegdichtung (12) vorgesehen ist, die beim Vergießen von dem fließfähigen Vergussmaterial umschlossen wird.

12. Verfahren nach einem der vorstehenden Ansprüche, bei welchem das Ansetzstück (1) über ein Halteelement gegenüber der Leitung (3) lagefixiert ist, welches Halteelement an einem Bereich einer Innenwandfläche (10) des Ansetzstücks (1) befestigt ist und zumindest eines von einem Ende der Leitung (3) und einem an einer Außenwandfläche der Leitung (3) nach außen hervortretenden Vorsprung hintergreift.

13. Leitungsanordnung für ein Verfahren nach einem der vorstehenden Ansprüche, welche ein Ansetzstück (1), ein Lagerelement (2) und eine Leitung (3) aufweist und zum baulich Integrieren mit fließfähigem und dann erstarrendem Material in ein Wand- oder Bodenelement vorgesehen ist, wobei das Ansetzstück (1) dazu ausgelegt ist, in dem Wand- oder Bodenelement eine Ausnehmung freizuhalten, bei welcher Leitungsanordnung zwischen Ansetzstück (1) und Leitung (3) ein Lagerelement (2) angeordnet ist, wobei das Ansetzstück (1) derart ausgelegt ist, dass es in dem dann erstarrten Vergussmaterial die Ausnehmung freihält, die an eine Seitenfläche des Wand- oder Bodenelements grenzt **dadurch gekennzeichnet, dass** das Lagerelement (3) eine geringere Shore-Härte als das Ansetzstück (1) hat und die Ausnehmung einen Durchmesser um mindestens 30 % größer als der Außendurchmesser der Leitung (3) Rat.

14. Wand- oder Bodenelement mit einer Leitungsanordnung nach Anspruch 13.

15. Verwendung eines Ansetzstücks (1) und eines Lagerelements (2) für eine Leitungsanordnung nach Anspruch 13 oder ein Wand- oder Bodenelement nach Anspruch 14.

## Claims

1. A method for integrating a line (3) structurally into a wall or floor element, comprising the steps:
- providing an attachment piece (1) adapted for keeping clear a recess in said wall or floor element;
- mounting said attachment piece (1) to said line (3), namely by a bearing member (2) between said line (3) and said attachment piece (1);
- integrating said attachment piece (1) together with said line (3) structurally into said wall or floor element, namely by casting with a casting material being pourable first and hardening then, wherein said attachment piece (1) keeps clear said recess in the casting material hardened, said recess lying adjacent to a side face of said wall or floor element, **characterized in that** said bearing member (3) has a lower Shore hardness than said attachment piece (1) and said recess has a diameter being by at least 30 % larger than an outer diameter of said line (3).

2. The method according to claim 1, wherein said bearing member has an inter-surface towards said attachment piece (1) and an inter-surface towards said line (3), wherein at least one of those bearing member inter-surfaces has a length extension taken in a line direction (5), which amounts to at least 10 % of said outer diameter of said line (3).

3. The method according to claim 1 or 2, wherein said bearing member (2) has a thickness taken perpendicularly to a line direction (5), which amounts to at least 5 % of said outer diameter of said line (3).

4. The method according to one of the preceding claims, wherein said bearing member (2) contacts said line (3), the line (3) being preferably contacted by said bearing member (2) exclusively.

5. The method according to one of the preceding claims, wherein said attachment piece (1) and said bearing member (2) are multi-part.

6. The method according to one of the preceding claims, wherein said bearing member (2) contacts said line, wherein a recess (13) is provided at the inside of said bearing member (2), said recess receiving a projection of said line (3), said projection projecting outwards.

7. The method according to claim 5, also according to claim 5 in combination with claim 6, wherein a first projection (9) is provided at said bearing member (2), namely with respect to said side face of said wall or floor element proximal thereto in comparison to a contact area between said bearing member (2) and said attachment piece (1), said first projection (9) projecting away from said line and contacting a region of an inner wall surface (10) of said attachment piece (1).

8. The method according to one of the preceding claims, wherein said attachment piece (1) comprises a collar (4) turned away from said side face of said wall or floor element, said collar extending in a line direction (5) and having an intermediate surface towards said bearing member (2).

9. The method according to claim 5, also according to claim 5 in combination with a further one of claims 6 to 8, wherein a second projection (11) is provided at said bearing member (2), namely with respect to said side face of said wall or floor element distal thereto in comparison to a contact area between said bearing member (2) and said attachment piece (1), said second projection (1) projecting away from said line (3) and contacting a front side of said attachment piece (1), said front side of said attachment piece lying turned away from said side face of said wall or floor element.

10. The method according to claim 5, preferably in combination with one or more of claims 6 to 9, wherein said attachment piece (1) is displaceably guided in a line direction (5) at said bearing member (2).

11. The method according to one of the preceding claims, wherein a sealing (12) is provided on the outside of said bearing member (2), said sealing (12) projecting away from said line (3) and being enclosed by said pourable casting material during said casting.

12. The method according to one of the preceding claims, wherein said attachment piece (1) is held in position with respect to said line (3) by a holding member, said holding member being mounted at a region of an inner wall surface (10) of said attachment piece (1) and engaging behind at least one of an end of said line (3) and a projection projecting outwardly at an outer wall surface of said line (3).

13. A line arrangement for a method according to one of the preceding claims, comprising an attachment piece (1), a bearing member (2) and a line (3) and being provided for being integrated structurally into a wall or floor element by a pourable material hardening then, wherein said attachment piece (1) is adapted for keeping clear a recess in said wall or floor element, wherein said line arrangement comprises a bearing member (2) between said attachment piece (1) and said line (3), wherein said attachment piece is adapted for keeping clear said recess in said casting material hardened, said recess lying adjacent to a side face of said wall or floor element, **characterized in that** said bearing member (2) has a lower Shore hardness than said attachment piece (1) and said recess has a diameter being by at least 30 % larger than an outer diameter of said line (3).

14. Wall or floor element comprising a line arrangement according to claim 13.

15. Use of an attachment piece (1) and a bearing member (2) for a line arrangement according to claim 13 or a wall or floor element according to claim 14.

## Revendications

1. Procédé d'encastrement structurel d'une conduite (3) dans un élément de paroi ou de sol, comprenant les étapes consistant à :
- prévoir une pièce rapportée (1), conçue pour maintenir dégagée une cavité dans l'élément de paroi ou de sol ;
- monter la pièce rapportée (1) sur la conduite (3), et ce avec un élément de palier (2) entre la conduite (3) et la pièce rapportée (1) ;
- encastrer structurellement la pièce rapportée (1) conjointement à la conduite (3) dans l'élément de paroi ou de sol, et ce par coulage d'un matériau qui est d'abord fluide avant de se solidifier, la pièce rapportée (1) maintenant alors dégagée la cavité dans le matériau coulé solidifié, cette dernière débouchant sur une surface latérale de l'élément de paroi ou de sol, **caractérisé en ce que** l'élément de palier (2) présente une moindre dureté Shore que la pièce rapportée (1) et la cavité présente un diamètre d'au moins 30 % supérieur au diamètre extérieur de la conduite (3).

2. Procédé selon la revendication 1, dans lequel l'élément de palier présente une surface intermédiaire respective vis-à-vis de la pièce rapportée (1) et de la conduite (3), au moins une des ces surfaces intermédiaires de l'élément de palier présentant une étendue longitudinale, prise dans le sens (5) de la conduite, correspondant à au moins 10 % du diamètre extérieur de la conduite (3).

3. Procédé selon la revendication 1 ou 2, dans lequel l'élément de palier (2) présente une épaisseur, prise perpendiculairement au sens (5) de la conduite, correspondant à au moins 5 % du diamètre extérieur de la conduite (3).

4. Procédé selon l'une quelconque des revendications précédentes, dans lequel l'élément de palier (2) est en appui contre la conduite (3), ledit élément de palier (2) étant de préférence le seul à être en appui contre la conduite (3).

5. Procédé selon l'une quelconque des revendications précédentes, dans lequel la pièce rapportée (1) et l'élément de palier (2) se composent de plusieurs pièces.

6. Procédé selon l'une quelconque des revendications précédentes, dans lequel l'élément de palier (2) est en appui contre la conduite et un évidement (13) est prévu dans la paroi intérieure de l'élément de palier (2) pour recevoir une proéminence de la conduite (3) dirigée vers l'extérieur.

7. Procédé selon la revendication 5, y compris selon la revendication 5 en lien avec la revendication 6, dans lequel il est prévu, sur l'élément de palier (2), une première proéminence (9) à proximité d'une surface d'appui existant entre l'élément de palier (2) et la pièce rapportée (1), par rapport à la surface latérale de l'élément de paroi ou de sol, ladite première proéminence faisant saillie en s'éloignant de la conduite et étant en appui contre une partie d'une surface de paroi intérieure (10) de la pièce rapportée (1).

8. Procédé selon l'une quelconque des revendications précédentes, dans lequel la pièce rapportée (1) est pourvue d'une collerette (4) opposée à la surface latérale de l'élément de paroi ou de sol et dont l'étendue est orientée dans le sens (5) de la conduite en présentant une grande surface intermédiaire de contact avec l'élément de palier (2).

9. Procédé selon la revendication 5, y compris selon la revendication 5 en lien avec une revendication supplémentaire parmi les revendications 6 à 8, dans lequel il est prévu, sur l'élément de palier (2), une deuxième proéminence (11) à distance d'une surface d'appui existant entre l'élément de palier (2) et la pièce rapportée (1), par rapport à la surface latérale de l'élément de paroi ou de sol, ladite deuxième proéminence faisant saillie en s'éloignant de la conduite (3) et étant en appui contre une surface frontale de la pièce rapportée (1) opposée à la surface latérale.

10. Procédé selon la revendication 5, de préférence en lien avec une ou plusieurs des revendications 6 à 9, dans lequel la pièce rapportée (1) est installée coulissante sur l'élément de palier (2) dans le sens (5) de la conduite.

11. Procédé selon l'une quelconque des revendications précédentes, dans lequel un joint à gradins (12) orienté en s'éloignant de la conduite (3) est prévu sur l'extérieur de l'élément de palier (2) et est noyé dans le matériau coulé fluide.

12. Procédé selon l'une quelconque des revendications précédentes, dans lequel la pièce rapportée (1) est fixée en position par un élément de retenue vis-à-vis de la conduite (3), lequel élément de retenue est fixé à une partie d'une surface de paroi intérieure (10) de la pièce rapportée (1) et agrippe l'arrière d'une extrémité de la conduite (3) et/ou d'une proéminence, dirigée vers l'extérieur, présente sur une surface de paroi extérieure de la conduite (3).

13. Agencement de conduite destiné à un procédé selon l'une quelconque des revendications précédentes, présentant une pièce rapportée (1), un élément de palier (2) et une conduite (3) et destiné à être encastré structurellement au moyen d'un matériau, qui est d'abord fluide avant de se solidifier, dans un élément de paroi ou de sol, la pièce rapportée (1) étant conçue pour maintenir dégagée une cavité dans l'élément de paroi ou de sol, un élément de palier (2) étant disposé entre la pièce rapportée (1) et la conduite (3), ladite pièce rapportée (1) étant conçue pour maintenir dégagée la cavité dans le matériau coulé solidifié, cette dernière débouchant sur une surface latérale de l'élément de paroi ou de sol, **caractérisé en ce que** l'élément de palier (3) présente une moindre dureté Shore que la pièce rapportée (1) et la cavité présente un diamètre d'au moins 30 % supérieur au diamètre extérieur de la conduite (3).

14. Élément de paroi ou de sol comportant un agencement de conduite selon la revendication 13.

15. Utilisation d'une pièce rapportée (1) et d'un élément de palier (2) pour un agencement de conduite selon la revendication 13 ou un élément de paroi ou de sol selon la revendication 14.
